**Europäisches Patentamt**

**European Patent Office**

**Office européen des brevets**

(11) Veröffentlichungsnummer: **0 031 516**
**B1**

# (12) EUROPÄISCHE PATENTSCHRIFT

(45) Veröffentlichungstag der Patentschrift:
14.11.84

(21) Anmeldenummer: 80107762.9

(22) Anmeldetag: 09.12.80

(51) Int. Cl.³: **H 05 B 1/02,** G 05 D 23/30

(54) Steuergerät für Elektrowärmegeräte.

(30) Priorität: 20.12.79 DE 2951334

(43) Veröffentlichungstag der Anmeldung:
08.07.81 Patentblatt 81/27

(45) Bekanntmachung des Hinweises auf die Patenterteilung:
14.11.84 Patentblatt 84/46

(84) Benannte Vertragsstaaten:
AT CH DE FR GB IT LI SE

(56) Entgegenhaltungen:
DE - A - 1 515 131
DE - A - 2 310 867
DE - A - 2 850 389
DE - B - 1 192 340
DE - B - 1 243 297

(73) Patentinhaber: **E.G.O. Elektro-Geräte Blanc u. Fischer,
Postfach 1180, D-7519 Oberderdingen (DE)**

(72) Erfinder: **Gössler, Gerhard, Mörikestrasse 46,
D-7519 Oberderdingen (DE)**

(74) Vertreter: **Patentanwälte Ruff und Beier,
Neckarstrasse 50, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Steuergerät für Elektrowärmegeräte mit einem Leistungssteuergerät für die taktweise Zufuhr von elektrischem Strom zu der Beheizung des mit einem von einer Hilfsbeheizung beheizbaren Temperaturfühler versehenen Elektrogerätes sowie mit einem von dem Temperaturfühler beaufschlagten Temperaturschalter, der bei Erreichen der Solltemperatur eine Verringerung des der Beheizung zugeführten Stromes bewirkt, wobei der Taktschalter des Leistungssteuergerätes als Umschalter ausgebildet ist, mit dessen einer Ausgangsklemme die Hilfsbeheizung und mit dessen anderer Ausgangsklemme die Beheizung des Leistungssteuergerätes verbunden ist.

Es ist bereits ein Steuergerät der eingangs genannten Art bekannt (DE-A-1 515 131). Bei diesem Steuergerät enthält der Temperaturschalter zwei mechanisch gekoppelte, galvanisch getrennte Ein-Aus-Schalter, von denen der eine in Reihe zu der Beheizung des Leistungssteuergerätes liegt. Unterhalb der Solltemperatur dieses Temperaturschalters ist dieser geöffnet, so dass das Leistungssteuergerät nicht taktet, sondern ständig in der einen Stellung bleibt.

Daher ist die Hilfsbeheizung des Temperaturfühlers unterhalb der Schalttemperatur nicht eingeschaltet. Erst nach erstmaligem Schalten fängt das Leistungssteuergerät an, die Stromversorgung zu takten, so dass auch erst dann die Hilfsbeheizung des Temperaturfühlers in Betrieb genommen wird. Vor dem ersten Schalten des Temperaturschalters ist eine Veränderung der Schalttemperatur durch die Hilfsbeheizung nicht möglich. Darüber hinaus sind zwischen dem Steuergerät und der zu steuernden Beheizung insgesamt fünf Leitungen erforderlich.

Bei diesem Steuergerät ist zwar schon erkannt worden, dass diese Ausbildung zu einer Anheizspitze führt. Als mögliche Abhilfe ist jedoch vorgeschlagen worden, eine zusätzliche Heizwicklung oder einen Teil der Heizwicklung mit Einschaltung des Heizkreises an Spannung zu legen. Dies erfordert jedoch einen weiteren Aufwand, der zu einer Abflachung der Temperaturspitze führt, jedoch immer noch nicht eine veränderbare Beeinflussung des Temperaturfühlers ermöglicht.

Es ist ein weiteres Steuergerät bekannt (DE-C-2 527 194), bei dem zwei temperaturabhängige Schalter vorhanden sind, die jeweils bei Erreichen einer bestimmten Solltemperatur die Überbrückung des mit dem Leistungssteuergerät verbundenen Schalters öffnen. Diese beiden temperaturabhängigen Schalter sind parallelgeschaltet, wobei durch einen manuell betätigbaren Schalter ausgewählt werden kann, welcher der beiden temperaturabhängigen Schalter in Funktion treten soll. Hierbei ist es also nur möglich, dass das Steuergerät manuell auf zwei verschiedene Solltemperaturen eingestellt werden kann.

Der Erfindung liegt die Aufgabe zugrunde, ein einfach aufgebautes Steuergerät der eingangs genannten Art zu schaffen, mit dessen Hilfe die Solltemperatur stufenlos elektrisch einstellbar ist.

Zur Lösung dieser Aufgabe schlägt die Erfindung ein Steuergerät der eingangs genannten Art vor, bei dem erfindungsgemäss der als Umschalter ausgebildete Temperaturschalter das Leistungssteuergerät bis zum Erreichen einer bestimmten Solltemperatur überbrückt und bei Erreichen der Solltemperatur die Beheizung des Elektrogerätes an die zweite Ausgangsklemme des Leistungssteuergerätes anlegt.

Bei dem von der Erfindung vorgeschlagenen Steuergerät arbeitet das übliche Leistungssteuergerät von Anfang an, auch wenn es von dem Temperaturschalter überbrückt wird. Diese Überbrückung bedeutet nichts anderes, als dass der Eingang des Leistungssteuergerätes direkt mit der zu steuernden Beheizung verbunden ist. Unabhängig davon arbeitet das Leistungssteuergerät, so dass aufgrund der Anordnung der Hilfsbeheizung diese bereits taktend mit Strom versorgt wird. Es ist hier also von Anfang an, d.h. auch vor dem erstmaligen Schalten des Temperaturschalters, seine Beeinflussung durch die Hilfsbeheizung gegeben. Darüber hinaus braucht der Umschalter nur als einpoliger Schalter ausgebildet zu sein, und es ist möglich, ein übliches Leistungssteuergerät zu verwenden, das nicht speziell angepasst zu werden braucht. Falls bei einem Herd mit mehreren Kochplatten nicht alle Kochplatten mit den Massnahmen nach der Erfindung versehen werden sollen, kann dennoch bei allen Kochplatten das gleiche Steuergerät verwendet werden, was die Anzahl der unterschiedlichen Teile für die Kochherde verringert.

Die Anzahl der zwischen dem Steuergerät und der zu steuernden Beheizung erforderlichen Verbindungsleitungen wird um eine Leitung verringert.

Eine besonders günstige Weiterbildung der Erfindung ist dann gegeben, wenn der Temperaturschalter ein kombinierter Um-Aus-Schalter ist, der bei Überschreiten der Solltemperatur die Beheizung des Elektrogerätes an den Ausgang des Leistungssteuergerätes legt und bei Überschreiten einer Maximaltemperatur die Stromzufuhr zu der Beheizung des Elektrogerätes unterbricht. Durch diese Massnahmen wird der zur Temperatursteuerung verwendete Temperaturschalter gleichzeitig noch als Temperaturbegrenzer ausgenutzt, was den Aufwand für einen zusätzlichen Schalter unnötig macht.

Besonders günstig ist es, wenn der Temperaturschalter als Doppelschnappschalter ausgebildet ist, dessen eine Hälfte bei einer höheren Temperatur anspricht als die andere.

Zur Veränderung der Solltemperatur der Beheizung des Elektrogerätes kann beispielsweise die Einschaltdauer des Leistungssteuergerätes in an sich bekannter Art durch eine veränderliche Vorspannung des Ausdehnungselementes des Leistungssteuergerätes veränderbar sein. Diese veränderbare Vorspannung kann insbesondere durch eine Kurvenscheibe hergestellt werden.

Besonders günstig ist es, wenn der Temperaturfühler als einfacher Anlegethermostat ausgebildet ist. Bei Automatik-Kochplatten kann dieser Anlegethermostat beispielsweise im beweglichen Fühler der Kochplatte untergebracht sein. Weitere Merkmale, Einzelheiten und Vorzüge ergeben sich aus der folgenden Beschreibung bevorzugter Ausführungsformen sowie anhand der Zeichnung. Hierbei zeigen:

Fig. 1 ein Schaltschema des erfindungsgemäss ausgestalteten Steuergerätes,

Fig. 2 eine abgeänderte Ausführungsform des Temperaturschalters,

Fig. 3 den zeitlichen Verlauf der Spannungen an drei verschiedenen Punkten der Schaltung,

Fig. 4 eine der Fig. 3 entsprechende Darstellung mit einer unterschiedlichen Einschaltdauer des Leistungssteuergerätes,

Fig. 5 eine weitere Ausführungsform des Temperaturschalters.

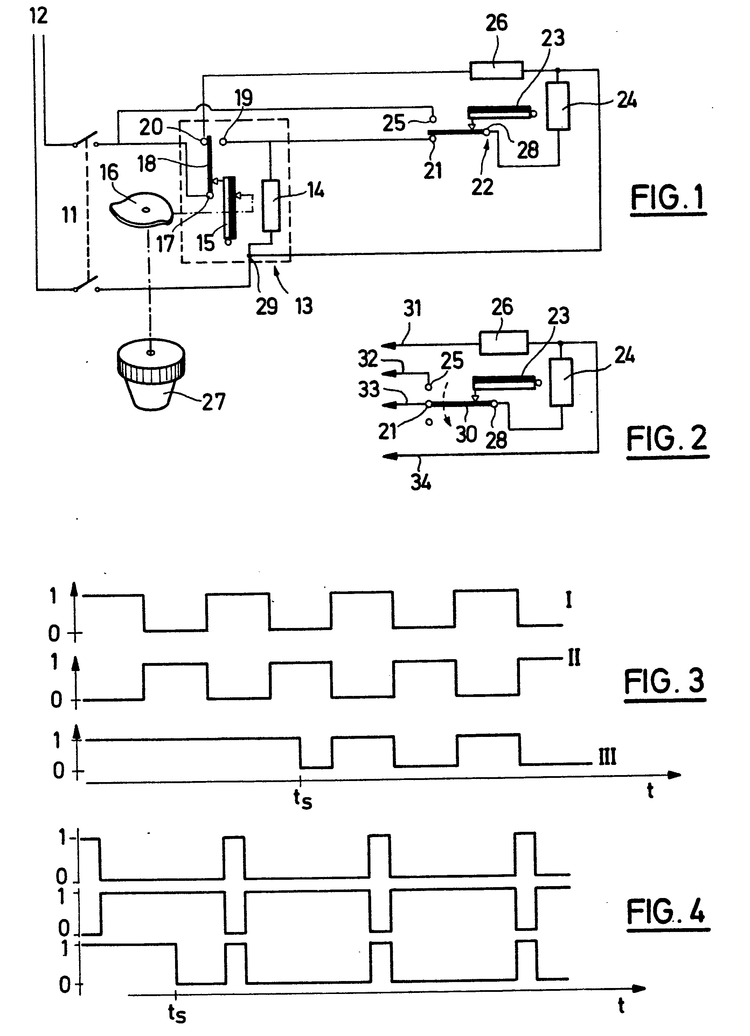

Über einen zweipoligen Hauptschalter 11 ist die in Fig. 1 dargestellte Schaltung mit einer Spannungsquelle 12 verbunden. Parallel zu der Spannungsquelle liegt das in dem gestrichelten Rechteck dargestellte Leistungssteuergerät 13, das hier in beheizter, d.h. geöffneter Stellung dargestellt ist. Es enthält eine Beheizung 14, in deren unmittelbaren Nähe ein Ausdehnungselement 15 angeordnet ist. Das Ausdehnungselement 15, das von der Kurvenscheibe 16 mechanisch beaufschlagt ist, wirkt mechanisch auf einen Schalter 18, der als Umschalter ausgebildet ist. Die Fig. 1 zeigt den Schalter 18 bei erwärmtem Ausdehnungselement 15. Der feste Kontakt 17 ist mit der Sekundärseite des Hauptschalters 11 verbunden.

Der eine Ausgang 19 des Schalters 18, d.h. der Ausgang, an dem die am Kontakt 17 anliegende Spannung anliegt, wenn das Ausdehnungselement 15 kalt ist, ist mit einer Klemme 21 eines als Umschalter ausgebildeten Temperaturschalters 22 verbunden. Der Temperaturschalter 22 enthält einen Temperaturfühler 23, der als Ausdehnungselement ausgebildet ist. Dieser Temperaturfühler wirkt mechanisch auf den Schalter 22 ein. Er ist in der Nähe der Beheizung 24 des eigentlichen Kochgerätes angeordnet. Von der Beheizung 24 des Kochgerätes ausgehende Wärme erwärmt daher den Temperaturfühler 23, so dass die von der Beheizung 24 ausgehende Wärme zu einer Betätigung des Schalters 22 führt. Die Fig. 1 zeigt den Schalter 22 bei erwärmtem Temperaturfühler 23.

Der Temperaturschalter 22 weist eine weitere Eingangsklemme 25 auf, die direkt mit der Sekundärseite des Hauptschalters 11, d.h. mit dem festen Kontakt 17 des Leistungssteuergerätes 13 verbunden ist. Bei kaltem Temperaturfühler 23 stellt der Temperaturschalter 22 daher eine Verbindung zwischen der Sekundärseite des Hauptschalters 11 und der Beheizung 24 her. Das bedeutet, dass bei geschlossenem Hauptschalter 11 und kalter Beheizung 24 diese direkt am Netz liegt. Zusätzlich zu der Beheizung 24 des eigentlichen Elektrowärmegerätes ist in unmittelbarer Nähe des Temperaturfühlers 23 eine weitere Hilfsbeheizung 26 angeordnet, die mit dem Ausgang 20 des Leistungssteuergerätes 13 verbunden ist.

Die der mechanischen Vorspannung des Ausdehnungselementes 15 des Leistungssteuergerätes 13 dienende Kurvenscheibe 16 ist mechanisch mit einem Einstellknopf 27 verbunden. Mit diesem Einstellknopf 27 kann das Verhältnis von Einschalt- zu Ausschaltdauer des Leistungssteuergerätes 13 eingestellt werden.

Die Wirkungsweise des erfindungsgemässen Steuergerätes ist folgendermassen. Bei kalter Beheizung wird zunächst der Schalter 11 geschlossen. In diesem Fall liegt zunächst der Schalter 18 an dem Ausgang 19 und der Temperaturschalter 22 an der Eingangsklemme 25 an. Damit erhält die Beheizung 14 des Leistungssteuergerätes 13 und die Beheizung 24 des Elektrogerätes Spannung, wodurch sich beide Beheizungen erwärmen. Sobald der Schalter 18 zum Ausgang 20 umschaltet, wird die Hilfsbeheizung 26 beheizt, was zu einer stärkeren Erwärmung des Temperaturfühlers 23 führt. Sobald der Temperaturfühler 23 seinen Sollwert erreicht, schaltet der Temperaturschalter 22 von der Eingangsklemme 25 auf die Eingangsklemme 21 um, so dass die Beheizung 24 nunmehr von dem Ausgang 19 des Leistungssteuergerätes 13 mit Strom versorgt wird.

Die Diagramme der Fig. 3 und 4 zeigen diese Wirkungsweise noch einmal. Dabei zeigt die Kurve I die Spannung am Ausgang 19 des Leistungssteuergerätes 13, die Kurve II die dazu komplementäre Spannung am Ausgang 20 des Leistungssteuergerätes 13 und die Kurve III die am Ausgang 28 des Temperaturschalters 22 anliegende Spannung. Aus Gründen der Einfachheit sind die Spannungen auf 1 normiert. Es ist zunächst zu sehen, dass die Spannungen an den Ausgängen 19 und 20 des Leistungssteuergerätes 13 komplementär zueinander sind. Bei der Fig. 3 ist angenommen, dass die Einschaltdauer des Leistungssteuergerätes 50% beträgt, d.h., dass die Einschaltdauer und die Ausschaltdauer des Leistungssteuergerätes gleich sind. Nach einer bestimmten Zeit $t_S$ schaltet der Temperaturschalter 22 um, so dass sein Ausgang 28 nunmehr mit dem Ausgang 19 des Leistungssteuergerätes 13 verbunden ist. Daher folgt von diesem Zeitpunkt an die Spannung am Ausgang 28 des Temperaturschalters 22 der Spannung am Ausgang 19 des Leistungssteuergerätes 13.

Die Fig. 4 zeigt eine der Fig. 3 ähnliche Darstellung, wobei jedoch die Einschaltdauer des Leistungssteuergerätes etwa 14% beträgt. Auch hier ist wieder die Kurve II komplementär zur Kurve I, was bedeutet, dass die Hilfsbeheizung 26 des Temperaturschalters 22 länger beheizt wird, was zu einem schnelleren Ansprechen des Temperaturschalters 22 führt. Dies ergibt sich aus der Kurve III.

Damit ergibt sich, dass eine Veränderung der Einschaltdauer des Leistungssteuergerätes 13 auch zu einer Veränderung der Solltemperatur der Beheizung 24 des Elektrogerätes führt, obwohl keinerlei Eingriffe an dem Temperaturschalter 22 oder dem Temperaturfühler 23 vorgenommen wurden. Es wird also mit Hilfe der Erfindung möglich, unter Verwendung eines auf eine ganz bestimmte Auslösetemperatur voreingestellten Temperaturschalters 22 eine kontinuierlich veränderbare Solltemperatur der Beheizung 24 eines Elektrogerätes, beispielsweise einer Kochplatte oder eines Backofens, herzustellen. Dies geschieht allein durch Veränderung der relativen Einschaltdauer des Leistungssteuergerätes.

Es ist natürlich auch möglich, über einen Mehrfachschalter jeweils eine von mehreren Hilfsbeheizungen einzuschalten, die jeweils unterschiedlichen Widerstand besitzen, so dass unter Verwendung nur eines Temperaturschalters dennoch mehrere Solltemperaturen möglich werden.

Fig. 2 stellt eine abgewandelte Ausführungsform des Temperaturschalters dar. Es sind bei den gleichen Teilen die gleichen Bezugszeichen wie in Fig. 2 verwendet. Die Leitung 31 ist mit dem Ausgang 20 des Leistungssteuergerätes 13 verbunden, die Leitung 32 mit dem festen Kontakt 17 des Schalters 18, die Leitung 33 dem Ausgang 19 des Leistungssteuergerätes 13 und die Leitung 34 mit dem Punkt 29 der Schaltung nach Fig. 1.

Der Temperaturschalter 22 nach Fig. 2 ist als Umschalter 30 ausgebildet, wobei bei kaltem Temperaturfühler 23 eine Verbindung zwischen der Eingangsklemme 25 und dem Ausgang 28 hergestellt ist, bei steigender Temperatur wird umgeschaltet auf eine Verbindung zwischen der Eingangsklemme 21 und dem Ausgang 28, bei noch weiter steigender Temperatur wird der Umschalter 30 in der durch den gestrichelten Pfeil dargestellten Richtung weitergeschaltet, so dass er die Stromverbindung zu der Beheizung 24 des Elektrogerätes vollständig unterbricht.

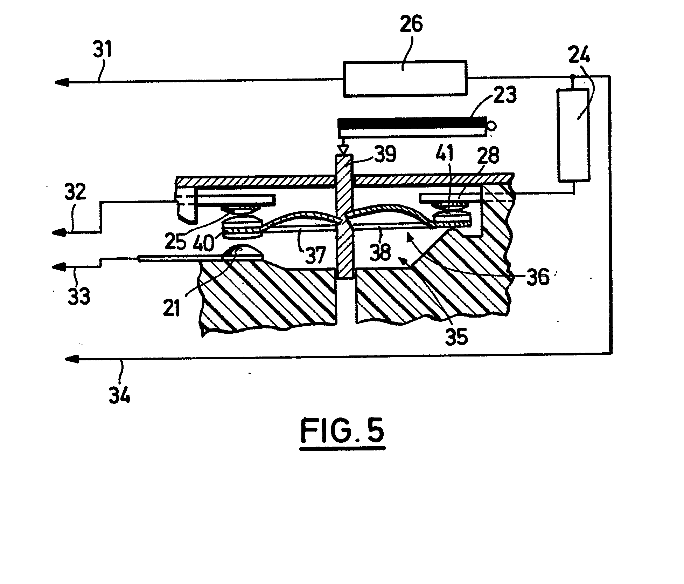

Bei der Ausführungsform des Temperaturschalters nach Fig. 5 ist dieser als Doppelschnappschalter 35 ausgebildet. Er enthält eine Doppelschnappfeder 36, die in der Fig. 5 bei kaltem Temperaturfühler 23 dargestellt ist. Die linke Hälfte 37 der Doppelschnappfeder 36 spricht bei einer niedrigeren Temperatur an, als die rechte Hälfte 38. Wenn der Temperaturfühler 23 in Fig. 5 sich erwärmt und auf die in axialer Richtung verschiebbare Stange 39 drückt, schnappt der bewegliche Kontakt 40 der Doppelschnappfeder 36 bei einer bestimmten Temperatur um, so dass nunmehr nicht mehr der Eingang 25, sondern der Eingang 21 mit dem Ausgang 28 verbunden ist. Bei weiterer Erhöhung der Temperatur, d.h. bei weiterem Abwärtsbewegen der Stange 39 schnappt dann die rechte Hälfte 38 um, so dass der bewegliche Kontakt 41 von dem Ausgang 28 frei wird. Damit wird ebenfalls eine Abschaltung der Beheizung 24 bei Überschreiten einer Maximaltemperatur bewirkt.

Die Leitungen 31 bis 34 in Fig. 5 entsprechen den Leitungen 31 bis 34 in Fig. 2 und sind mit den entsprechenden Stellen der Schaltungsanordnung nach Fig. 1 verbunden.

Der erfindungsgemäss ausgestaltete Regelgerät besitzt den grossen Vorteil, dass die in der zusätzlichen Hilfsbeheizung verbrauchte Leistung weder zu einer nachteiligen Erhöhung der Temperatur des eigentlichen Leistungssteuergerätes oder des Hauptschalters führt, noch unnütz verloren geht. Vielmehr dient die in der Hilfsbeheizung verbrauchte Leistung zu einem grossen Prozentsatz auch der Erwärmung z.B. der Kochplatte.

## Patentansprüche

1. Steuergerät für Elektrowärmegeräte mit einem Leistungssteuergerät (13) für die taktweise Zufuhr von elektrischem Strom zu der Beheizung (24) des mit einem von einer Hilfsbeheizung (26) beheizbaren Temperaturfühler (23) versehenen Elektrogerätes sowie mit einem von dem Temperaturfühler (23) beaufschlagten Temperaturschalter (22), der bei Erreichen der Solltemperatur eine Verringerung des der Beheizung (24) zugeführten Stromes bewirkt, wobei der Taktschalter (18) des Leistungssteuergerätes (13) als Umschalter ausgebildet ist, mit dessen einer Ausgangsklemme (20) die Hilfsbeheizung (26) und mit dessen anderer Ausgangsklemme (19) die Beheizung (14) des Leistungssteuergerätes (13) verbunden ist, dadurch gekennzeichnet, dass der als Umschalter ausgebildete Temperaturschalter (22) das Leistungssteuergerät (13) bis zum Erreichen einer bestimmten Solltemperatur überbrückt und bei Erreichen der Solltemperatur die Beheizung (24) des Elektrogerätes an die zweite Ausgangsklemme (19) des Leistungssteuergerätes (13) anlegt.

2. Steuergerät nach Anspruch 1, dadurch gekennzeichnet, dass der Temperaturschalter (22) ein kombinierter Um-Aus-Schalter (30) ist, der bei Überschreiten der Solltemperatur die Beheizung (24) des Elektrogerätes an den Ausgang (19) des Energiereglers (13) legt und bei Überschreiten einer Maximaltemperatur die Stromzufuhr zu der Beheizung (24) des Elektrogerätes unterbricht.

3. Steuergerät nach Anspruch 1 oder 2, dadurch gekennzeichnet, dass der Temperaturschalter (22) als Doppelschnappschalter (35) ausgebildet ist, dessen eine Hälfte (38) bei einer höheren Temperatur anspricht als die andere (37).

4. Steuergerät nach einem der vorhergehenden Ansprüche, dadurch gekennzeichnet, dass der Temperaturfühler (23) als Anlegethermostat ausgeführt ist.

## Claims

1. Control device for electric heating devices with a power control means (13) for the time supply of electric power to the heating means (24) of the electrical appliance provided with a temperature sensor (23) heatable by an auxiliary heating means (26), as well as with a temperature switch (22) subject to the action of temperature sensor (23) and which on reaching the desired temperature, reduces the power supplied to the heating means (24), the timing switch (18) of the power control means (13) is constructed as a reversing switch, to whose one output terminal (20) is connected the auxiliary heating means (26) and to whose other output terminal (19) is connected the heating means (14) of the power control means (13), characterized in that the temperature switch (22) constructed as a reversing switch bridges the power control means (13) until a given desired temperature is reached and on reaching the desired temperature applies heating means (24) of the electrical appliance to the second output terminal (19) of the power control means (13).

2. Control device according to claim 1, characterized in that the temperature switch (22) is a combined reversing-cutout switch (30) which, on exceeding the desired temperature, applies heating means (24) of the electrical appliance to output (19) of the power control means (13) and on exceeding a maximum temperature interrupts the power supply to the heating means (24) of the electrical appliance.

3. Control device according to claims 1 or 2, characterized in that the temperature switch (22) is constructed as a double snap switch (35), whereof one half (38) responds at a higher temperature than the other half (37).

4. Control device according to one of the preceding claims, characterized in that the temperature sensor (23) is constructed as a contact thermostat.

**Revendications**

1. Dispositif de commande pour appareils de chauffage électrique comportant un dispositif de commande de puissance (13) pour l'alimentation périodique en courant électrique de l'élément de chauffage (24) de l'appareil électrique muni d'un détecteur de température (23) chauffable par un élément de chauffage auxiliaire (26), ainsi qu'un commutateur thermique (22) activable par le détecteur de température (23), commutateur qui, lorsque la température désirée est atteinte, commande une réduction du courant envoyé à l'élément de chauffage (24), le commutateur périodique (18) du dispositif de commande de puissance (13) étant conformé en un inverseur, dont l'une des bornes de sortie (20) est connectée à l'élément de chauffage auxiliaire (26) et dont l'autre borne de sortie (19) est connectée à l'élément de chauffage (14) du dispositif de commande de puissance (13), caractérisé en ce que le commutateur de température (22) conformé en inverseur court-circuite le dispositif de commande de puissance (13) jusqu'à atteinte d'une température désirée prédéterminée et relie l'élément de chauffage (24) du dispositif électrique à la seconde borne de sortie (19) du dispositif de commande de puissance (13) lorsque la température désirée est atteinte.

2. Dispositif de commande selon la revendication 1, caractérisé en ce que le commutateur thermique (22) est un dispositif combiné inverseur-interrupteur (30), qui, lors du dépassement de la température désirée, relie l'élément de chauffage (24) de l'appareil électrique à la borne de sortie (19) du régulateur d'énergie (13) et qui, lors du dépassement d'une température maximale, interrompt l'alimentation en courant de l'élément de chauffage (24) de l'appareil électrique.

3. Dispositif de commande selon l'une des revendications 1 et 2, caractérisé en ce que le commutateur thermique (22) est conformé en commutateur instantané double (35) dont une moitié (38) réagit à une température plus élevée que l'autre (37).

4. Dispositif de commande selon l'une des précédentes revendications, caractérisé en ce que le détecteur de température (23) est construit sous la forme d'un thermostat d'appositions.

FIG.1

FIG.2

FIG.3

FIG.4

FIG.5